# EUROPEAN PATENT SPECIFICATION

(11) **EP 2 048 801 B1**
(45) Date of publication and mention of the grant of the patent: **08.08.2012**
(21) Application number: 07380274.6
(22) Date of filing: 11.10.2007
(51) Int. Cl.: H04B 17/00, H04N 17/00

(54) **Method for identifying and diagnosing interferences in RF signals and particularly television signals**
Verfahren zur Identifikation und Diagnose von Interferenzen bei HF-Signalen und insbesondere Fernsehsignalen
Procédé pour l'identification et le diagnostic d'interférences dans des signaux RF et en particulier des signaux de télévision

(43) Date of publication of application: 15.04.2009
(73) Proprietor: Promax Electronica, S.L., 08901 L'Hospitalet de Llobregat (ES)
(72) Inventor: Mas Raguer, Antoni, 08907 L'Hospitalet de Llobregat (ES); Espuna Tuyet, Josep, 08907 L'Hospitalet de Llobregat (ES); Pages Serra, Roma, 08907 L'Hospitalet de Llobregat (ES); Larroy Tovar, Pedro, 08907 L'Hospitalet de Llobregat (ES)
(74) Representative: Barroso Sánchez-Lafuente, Ignacio M.

(56) References cited:
- EP-A- 0 113 275
- EP-A- 1 538 570
- EP-A- 1 693 978
- WO-A-00/07302
- US-B1- 7 275 254

## Description

### Technical field of the invention

The present invention relates to the technical field of telecommunications and, more specifically, to the broadcasting of analogue and digital TV signals. Specifically, the invention relates to a method for identifying and diagnosing interferences in RF (radio frequency) signals, particularly Television signals, whether digitally (DVB-T, etc.) or analogically (PAL, etc.) encoded.

More specifically, the present invention relates to a method for identifying and diagnosing interferences in RF signals, particularly television signals, whether digital or analogue, in which, for each frequency, frequency band or interval or modulated signal, there is a predetermined optimal value of a control variable (D, A), based on time and frequency (spectrum), such as for example, intensity, radiated power, MER (Modulation Error Ratio), BER (Bit Error Ratio), etc.

### Background of the invention

The appearance of digital terrestrial television, DVB-T (Digital Video Broadcasting - Terrestrial), brought with it a series of major advantages: greater spectral efficiency with additional TV services, a much stronger television signal, more efficient use of radiated power, improved transmission network planning, etc.

The receiver's error-correction capacity is another undoubted advantage of digital terrestrial television according to the DVB-T standard.

However, the complexity of the signal received by the reception systems and the appearance of the "digital cliff" concept, have raised the need for new measurement methods to ensure quality digital television terrestrial receiver installations.

Until now, with analogue television, installation technicians were capable of interpreting electrical phenomena based on television signal measurements and the effects of said phenomena on image quality: signal reflections, high noise levels, impulse noise caused by machinery, etc. This intuitive diagnosis allowed the technicians to attack the root cause of the phenomenon, thereby ensuring a high-quality installation.

With digital terrestrial television DVB-T, the electrical phenomena that usually disrupt television signals are corrected by the reception system itself. Additionally, the characteristics of the new digital terrestrial television signal have given rise to new, previously unknown electrical and disrupting phenomena. Within this context, the installation technician cannot identify disrupting phenomena in the TV installation nor attack their root causes to eliminate them, as the system itself corrects the errors received, thereby hiding said phenomena, which can lead to a low-quality receiver installation, dangerously close to the aforementioned "digital cliff".

The present invention seeks to create diagnostic tools to measure incoming signals in digital terrestrial television DVB-T installations, aimed at detecting the phenomena that interfere with television signals.

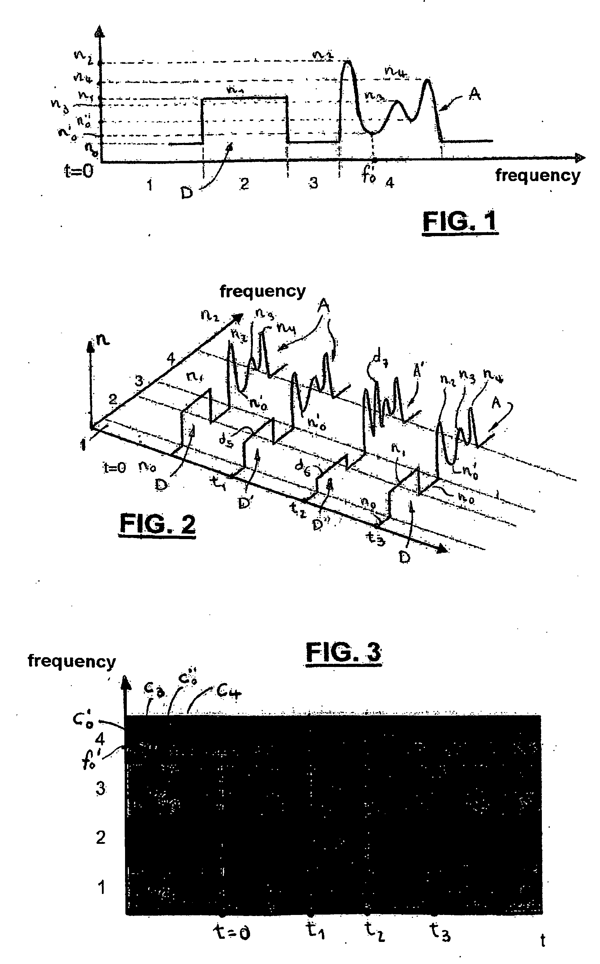

Figure 1 represents a typical digital television signal broadcast spectrum ("D" curve), in band or interval 2. This can be simplified according to an "echelon", the height of which is a broadcasting level or measurement of other broadcasting characteristics, such as for example, intensity, radiated power, MER (Modulation Error Ratio) or other control signals. The signal represented is, for example, a DVB-T-encoded TV (video) signal.

Figure 1 also represents, in the "A" curve of frequency interval 4, an analogue television signal broadcast spectrum in PAL (Phase Alternating Line) format, in which the spectrum takes on a wavy form with frequency-based control characteristic peaks and troughs. In this case, the PAL signal has been represented in frequency interval 4.

The broadcast quality of both signals implies the conservation of their respective spectrums over time. Nevertheless, "continuous or temporary impulse interferences" are known to affect said broadcast spectrums and, ultimately, quality of the signal received. Said interferences are transitory phenomena that bring about sudden changes in the conductor current that carries the TV signal, and can be caused by domestic appliances, ignition of nearby vehicles, electromagnetic phenomena in the atmosphere, etc. Their consequences are well-known analogue TV effects such as fog, snow, double image, stripes, etc. and for digital TV video signal gaps, pixelation, momentary loss of audio or DVB-T image freezing, etc. And, in general, any interference that affects levels, MER, BER, etc.

The current state of the art in the detection of interferences or any type of problem that may affect the proper reception of analogue TV signals is based on the analysis of the on-screen behaviour of the analogue signal received amidst interferences. But this procedure is ruled out in the case of digital signals.

Prior art documents US7275254; EP1538570; and EP1693978 describe a service level determiners (i.e. a system) permitting to identify and diagnose interferences" that cause a service level to be displayed as a service diagnostic indicator on a display device. In particular, they describe a method according to preamble of claim 1, for identifying and diagnosing interferences in RF signals, particularly television signals, whether digital or analogue, in which, for each frequency, frequency band or interval or modulated signal, there is a predetermined optimal value of a control variable (D, A), based on time and frequency (spectrum).

US7275254 displays the service level as a bar partially filled, EP1538570 as a bar graphics as a function of time; and EP1693978 as a curve graphed as a function also of time. But both US7275254 and EP1538570 and EP1693978 display a representation of a single channel, which may be seen as a drawback.

The purpose of the present invention is to provide a method for detecting and characterizing said interferences in order to prevent and correct them in advance, and permitting to overcome the drawbacks present in the prior art.

### Explanation of the invention

For such purpose, according to a first aspect, the object of the invention is to provide a new method for identifying and diagnosing interferences in RF signals, particularly television signals, whether analogue or digital, characterized in essence in that it consists of the following phases:
associating to each spectrum control variable level or value (no, n₁, ..., n₄) a respective, standard determined value (c₀, c₁, ..., c₄) of a determined colour or tone of the greyscale:
graphically representing, for each time instant (t) and each frequency or frequency interval (1, 2, 3, 4), the value of the previous determined visible colour or tone of the greyscale, as a function of the time; and
determining the presence of an interference (D', D", A') when a discontinuity in the value of the previous determined colour or tone of the greyscale is produced, giving rise to a new value (c₅, c₆, c₇) different to that of the expected standard determined colour or tone of the greyscale (c₁, c₁, c_{0'}).

According to another characteristic of the invention, the method consists of a subsequent phase in which the new, different value produced by the interference is associated to a specific type of interference.

The graphical representation operation can be carried out by plotting the TV frequency band frequency channels and digital TV broadcast spectrum carrier waves on x and y axes, being x the variable "time".

The spectrum control variable, the level of which is graphically represented, can be signal intensity, signal power or carrier wave MER or BER.

In a second aspect, the object of the invention is to provide a device to implement a methodology as previously described.

This "3D" representation of measurements, which uses a colour code for the "z" dimension (depth), exposes the desired signal interference content, thus revealing the intensity of said interference and its duration.

This analysis is carried out in terms of time and frequency on one hand and in terms of broadcasted carrier wave behaviour within the channel itself in the case of COFDM modulations.

In this way, the method of the present invention is focused on discovering the causes of signal interference, transitory or not, that may affect signal quality. This can be carried out by analyzing the colour patterns that appear on screen upon implementing the method of the present invention.

In this way, and upon associating a specific colour to a particular spectrum anomaly or interference, the presence of interferences can be intuitively discovered by simply observing a scheme such as that shown in Figs. 3, 7 or 8, in addition to identifying said interference (transitory interferences caused by domestic appliances, vehicle ignition, specific atmospheric phenomena or even the existence of magnetic defects in domestic wirings that would not otherwise be detected, etc.).

### Brief description of drawings

The preferred embodiments of the present invention are complemented by a set of drawings aimed at further explaining their characteristics, in which the following figures have been represented in an illustrative and unlimitative way:
- Fig. 1: shows a plan view of the typical digital TV and analogue TV broadcast signal spectrums;
- Fig. 2: shows several possible variations of the previous signals, in order to Fig. 3 illustrate possible interference-related spectrum variations; shows an example of embodiment of a secondary spectrum of the signals shown in Fig. 2 which, according to the invention, helps identify the interferences produced;
- Fig. 4: shows a representation of a digital television signal spectrum such as that shown in Fig. 1, although in greater detail;
- Fig. 5: shows a detailed view of the spectrum shown in Fig. 4, in which, for the purpose of clarity, a limited number of carrier waves have been represented - specifically nine carrier waves;
- Fig. 6: shows a three-dimensional representation of an example of MER values for multiple carrier waves in terms of time, in which the MER value is represented on the "z" axis, on the basis of qualitative criteria associated to a corresponding variation in colour which is indicative of height and thus the MER value for each time instant and for each carrier wave;
- Fig. 7: shows a two-dimensional view of Fig. 6, in which the MER value is only represented by a colour; and
- Fig. 8: shows a schematic view of an analyzing device displaying the two-dimensional representation of Fig. 7.

### Detailed description of drawings

Said drawings show the operating mode of the method of the present invention, for identifying and diagnosing interferences in RF signals, particularly television signals, whether digital or analogue. Said signals, for each frequency, frequency interval (1, 2, 3, 4) or carrier wave (P₁ to P₉, ...), have a predetermined control variable spectrum (D, A) optimal level, in terms of time (spectrum), such as for example, intensity, radiated power, MER, BER, etc.

Fig. 1 represents a typical digital television broadcast signal spectrum (D curve), in band or interval 2. This can be simplified based on an "echelon", the height of which is a broadcast level or measurement of other broadcasting characteristics, such as for example, intensity, radiated power, MER (Modulation Error Ratio) or other control signal. The represented signal is, for example, an DBVT-encoded TV (video) signal.

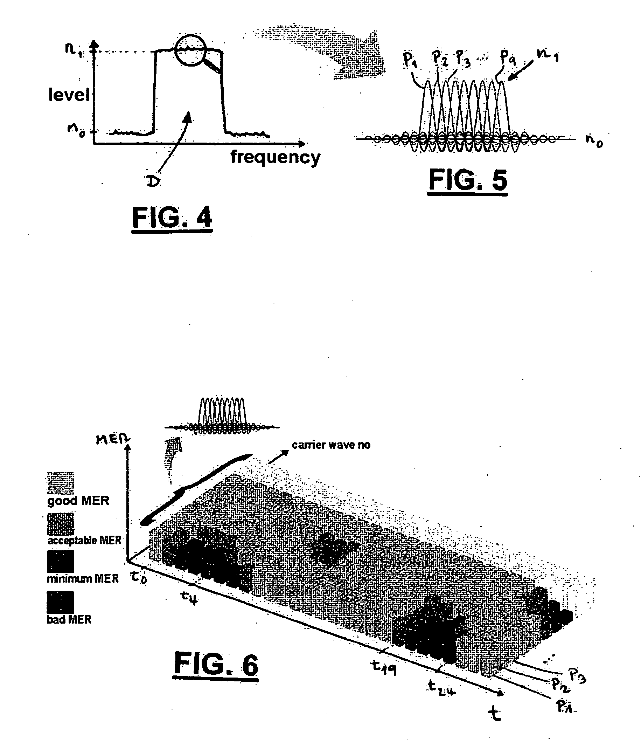

Fig. 4 shows a representation of the D spectrum of the digital television signal shown in Fig. 1, although in greater detail, while Fig. 5 shows an even more detailed view of the D spectrum shown in Fig. 4 in which, for the purpose of clarity, a limited number of carrier waves have been represented - specifically nine carrier waves (P₁ to P₉). The detailed aspects of a DBV-T TV signal spectrum with a flat plateau configuration are shown, with a "representative" average value of n₁ level.

Fig. 1 also represents, in the A curve of frequency interval 4, a digital television broadcast signal spectrum in PAL (Phase Alternating Line) format, in which the spectrum takes on a wavy form with frequency-based control characteristic peaks (n₂, n₃, n₄) and troughs (n'₀, n"₀).

Beyond the DVB-T and PAL signal frequency interval zones, the spectrum takes on a "baseline" value (no) that may or may not be equal to zero.

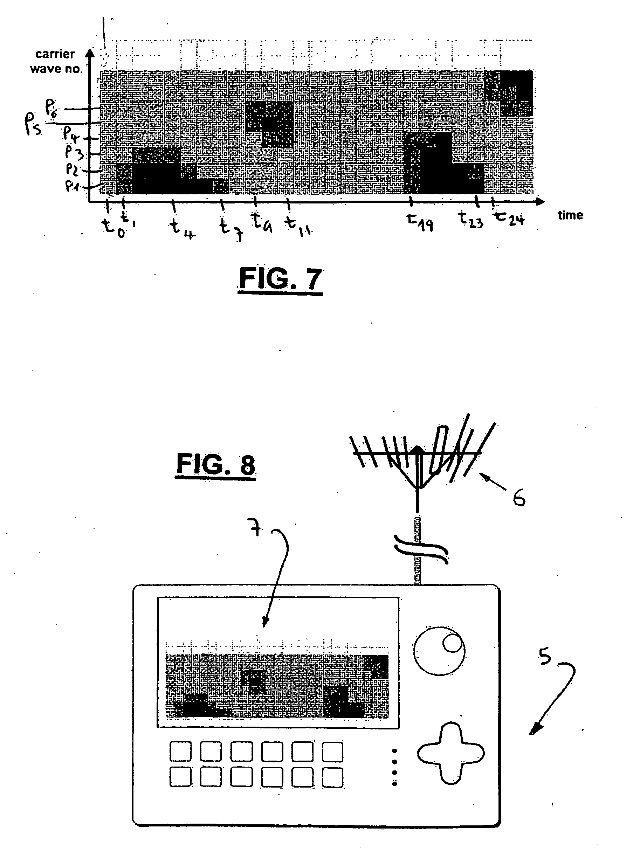

According to the method of the present invention, each spectrum control variable level or value (no, n₁, ..., n₄) is assigned a respective standard determined value (c₀, c₁, ..., c₄) of a determined colour or tone of the greyscale. For each time instant (t) and for each frequency, frequency interval (1, 2, 3, 4) or carrier wave number, each point of this two-dimensional space is represented by the colour or grey of the associated colour scheme. Each "frequency interval" can define a corresponding TV broadcast signal "carrier wave" (as previously explained in relation to Fig. 4 and 5 and, further on, Fig. 6 and 7).

According to the method, whenever an interference (D', D", A') is produced, the discontinuity in the colour or grey of the two-dimensional representation is verified by checking the appearance of a new, easily perceptible and parameterizable colour or grey value (c₅, c₆, c₇) different to the expected standard determined value, thereby enabling a numerical or computerized diagnosis.

Fig. 2 shows several possible variations of the aforementioned signals, illustrating possible interference-related spectrum variations over consecutive time instances (t=0, t₁, t₂ and t₃). The control level variable ("n") is represented for each time value (for example, by separating a system clock sampling or frequency time).

Fig. 3 shows a top plan view of a spectrum identical to that shown in Fig. 2. Each level has been represented by a tone of the corresponding greyscale:

| | | |
|---|---|---|
| n₀ | → | c₀ |
| n₁ | → | c₁ |
| n₂ | → | c₂ |
| n'₀ | → | c'₀ |
| n₃ | → | c₃ |
| n"₀ | → | c"₀ (frequency f'o) |
| n₄ | → | c₄ |

For t=0, a DA curve appears, which is, for example, the nominal curve or that represented in Fig. 1, lacking interferences or anomalies, with the colour scheme (bottom up) c₀c₁c₂c'₀c₃c"₀c₄.

For t=t₁, a D'A curve is represented in Fig. 2, in which a discontinuity in the colour of the interval 1 frequency band is produced in the D' digital part, associated to a drop to d₅ level with respect to "nominal" n₁ level, to which a new c₅ grey value corresponds, different (lighter) to that of c₁, which would correspond to the digital TV signal exempt from interferences. Analogue signal A remains unaltered, due to which the colours for t=t₁ coincide with those of t=0.

For t=t₂, a D"A' curve is represented in Fig. 2, in which a new discontinuity is produced in the D" digital part, specifically a new drop to d₆ with respect to "nominal" n₁ level, and in the A' analogue part of frequency interval 3, a "d₇" spurious peak is produced higher than that of the "nominal" n'₀ level value that would correspond to the f'o frequency (see Fig. 1) in question.

In Fig. 3, a new c₆ grey value corresponds to d₆, different to that of c₁ and c₅, easily perceptible in the graphical representation of Fig. 3. A darker c₇ grey than the c'₀ grey that would correspond to the "normal" n'₀ value at f'₀ frequency, corresponds to the "d₇" peak, which is also easily perceptible in Fig. 3.

Finally for t=t₃, the DA curve reappears in Fig. 2, lacking interferences or anomalies, and the colour scheme or greyscale without discontinuities or "lacking interferences" reappears in the representation of Fig. 3, with an identical colour scheme (c₀c₁c₂c'₀c₃c"₀c₄) to that of t=0.

According to the method, the new value different to the colour or grey produced by the interference is associated to a specific type of interference. Therefore, if the colour values are parameterized through the remote analysis thereof, we could identify the specific interference produced by the corresponding variation in level value (intensity, radiated Power, MER, BER, etc.).

Figs. 1 to 3 show the case in which the graphical representation operation is carried out by TV frequency band frequency channels.

However, there are alternative methods of spectrum representation. For example, in the case of digital TV signals (DVB-T), the graphical representation operation is carried out by digital TV broadcast spectrum carrier waves, as shown in Figs. 6 and 7.

A MER value is associated to each no. i p₁ carrier wave (only a few of the thousands of carrier waves p₁, p₂, p₃, p₄, p₅, p₆, p₇, p₈, p₉ comprising a digital signal are represented in Figs. 4 to 8), calculated in a well-known and conventional manner. The MER is a signal quality measurement. In order for the signal to be displayed correctly on the TV screen, MER must be equal to or greater than a predetermined minimum value to which, according to the present invention, a "minimum MER" grey value (Fig. 6) is associated. Other grey values ("bad MER") are associated to lower MER values, for example, darker greys, while other grey values ("acceptable MER", "good MER") are associated to higher values, and, for example, increasingly lighter greys are assigned as MER values improve.

Fig. 6 shows a three-dimensional representation of an example of MER values for multiple carrier waves, based on time "t". The "z" axis represents MER value based on the aforementioned qualitative criteria associated to a corresponding variation in colour or tone of the greyscale, which is indicative of height and therefore of MER value for each time instant and for each carrier wave.

Supposing that the representation of Figs. 4 and 5 is for a time instant t=0 and that MER for t=0 for the nine carrier waves p₁, p₂, p₃, p₄, p₅, p₆, p₇, p₈, p₉ is "good", all the carrier waves are graphically represented in Fig. 6 with the corresponding "good MER" grey.

Fig. 7 is a two-dimensional representation of Fig. 6 (a "top plan" view) in which MER value is solely represented by a colour. Therefore, for t=0 and for the nine carrier waves p₁, p₂, p₃, p₄, p₅, p₆, p₇, p₈, p₉, the "good MER" grey appears.

In the illustrative example shown, carrier wave interference takes place in p₁ between time instants t₁ and t₇, registering a minimum MER value for t₄. MER variation is distinguished by the variation in height of Fig. 6 and in the variation in colour of Figs. 6 and 7. MER value of carrier wave p₁ also drops between time instants t₁₉ and t₂₃. The anomalies or interferences affect p₁ and the carrier waves of the adjacent frequencies, although with a slighter variation in MER. The same happens in the case of carrier wave p₅ between time instants t₉ and t₁₁.

Finally, Fig. 8 shows a schematic view of an analyzing device, oscilloscope or analogue device 5, connected to an antenna 6 for reception of digital TV signals, on the display unit or screen 7 of which a two-dimensional representation of Fig. 7 is shown.

## Claims

1. Method for identifying and diagnosing interferences in radiofrequency signals, particularly television signals, whether analogue or digital, in which, for each frequency, frequency interval (1, 2, 3, 4) or carrier wave (P₁ to P₂,..) there is a predetermined optimal level of each spectrum control variable (D, A) associated with a standard determined value of a determined colour or tone of the gray scale (c₀,c_{1,} ...c₄) based on time (spectrum), such as for example, intensity, radiated power, MER, BER, etc.,
**characterized in that** it consists of the following phases:
associating to each spectrum control variable level or value (no, n₁, ..., n₄) a respective, determined value of determined colour or tone of the greyscale;
graphically representing, for each time instant (t) and each frequency or frequency interval (1, 2, 3, 4), or for each carrier wave (P₁ to P₉,...), the value of the previous determined colour or tone of the greyscale, as a function of the time; and
determining the presence of an interference (D', D", A') when a discontinuity in the value of the previous determined colour or tone of the greyscale is produced, giving rise to a new value (c₅, c₅, c₇) different to that of the expected standard determined colour or tone of the greyscale (c₀,c₁, ... c₄)

2. Method, according to Claim 1, **characterized in that** said graphical representation operation is carried out by TV frequency band frequency channels.

3. Method, according to Claim 1, **characterized in that** said graphical representation operation is carried out by digital TV broadcast spectrum carrier waves.

4. Method, according to Claim 1, **characterized in that** said spectrum control variable, the level of which is graphically represented, corresponds to signal intensity.

5. Method, according to Claim 1, **characterized in that** said spectrum control variable, the level of which is graphically represented, corresponds the measured MER by carrier.

6. Method, according to Claim 1, **characterized in that** said spectrum control variable, the level of which is graphically represented, corresponds to digital signal BER.

7. Device for the identification and diagnosis of interferences in RF signals, particularly analogue or digital television, radio or data signals, for the implementation of a method, according to the previous claims.

## Patentansprüche

1. Verfahren zur Identifizierung und Diagnose von Interferenzen in Radiofrequenzsignalen, bzw. insbesondere Fernsehsignalen, sowohl analoger als auch digitaler Art, wobei es für jede Frequenz, jedes Frequenzintervall (1, 2, 3, 4) oder jede Trägerwelle (P₁ zu P₉, ...) einen bestgeeigneten, vorbestimmten Pegel jeder mit einem bestimmten Standardwert einer bestimmten Farbe bzw. eines bestimmten Farbtons der Grauskala (c₀, c₁, ... c₄) in Verbindung stehenden Spektrumkontrollvariablen (D, A) auf Zeitbasis (Spektrum) gibt, wie zum Beispiel Intensität, ausgestrahlte Leistung, MER , BER, usw.;
**dadurch gekennzeichnet, daß** es aus den folgenden Phasen besteht:
Inverbindungsetzung jedes Pegels bzw. Werts der Spektrumkontrollovariablen (no, n₁, ..., n₄) mit einem entsprechenden, bestimmten Wert einer bestimmten Farbe bzw. eines bestimmten Farbtons des Grauskala;
für jeden Zeitpunkt (t) und jede Frequenz bzw. jedes Frequenzintervall (1, 2, 3, 4) oder für jede Trägerwelle (P₁ zu P₉, ...), graphische Darstellung des Werts der vorigen, bestimmten Farbe bzw. des vorigen, bestimmten Farbtons der Grauskala als Zeitfunktion; und
Feststellung der Anwesenheit einer Interferenz (D', D", A') beim Entstehen einer Unstetigkeit im Wert der vorigen, bestimmten Farbe bzw. des vorigen, bestimmten Farbtons der Grauskala unter Erzeugung eines neuen, von jenem der erwarteten, bestimmten Standardfarbe bzw. des erwarteten, bestimmten Standardfartbtons der Grauskala (c₀, c₁, ... c₄) abweichenden Werts (c₅, c₆, c₇);
wobei der neue, abweichende, von der Interferenz erzeugte Wert mit einer spezifischen Interferenzart in Verbindung steht.

2. Verfahren nach Anspruch 1, **dadurch gekennzeichnet, daß** die vorgenannte Operation der graphischen Darstellung von Frequenzkanälen im Fernsehfrequenzbereich durchgeführt wird..

3. Verfahren nach Anspruch 1, **dadurch gekennzeichnet, daß** die vorgenannte Operation der graphischen Darstellung von Trägerwellen des Übertragunsspektrums des Digitalfernsehens durchgeführt wird.

4. Verfahren nach Anspruch 1, **dadurch gekennzeichnet, daß** die vorgenannte Spektrumkontrollvariable, deren Pegel graphisch dargestellt wird, der Signalintensität entspricht.

5. Verfahren nach Anspruch 1, **dadurch gekennzeichnet, daß** die vorgenannte Spektrumkontrollvariable, deren Pegel graphisch dargestellt wird, dem gemessenen MER beim Träger entspricht.

6. Verfahren nach Anspruch 1, **dadurch gekennzeichnet, daß** die vorgenannte Spektrumkontrollvariable, deren Pegel graphisch dargestellt wird, der BER des digitalen Signals entspricht.

7. Vorrichtung zur Identifizierung und Diagnose von Interferenzen in RF-Signalen, bzw. insbesondere Analog- oder Digitalfernseh-, Rundfunk- oder Datensignalen, zur Implementierung eines Verfahrens nach den vorhergehenden Ansprüchen.

## Revendications

1. Méthode pour identifier et diagnostiquer des interférences dans des signaux de radiofréquence, particulièrement des signaux de télévision, aussi bien analogique que numérique, où, pour chaque fréquence, intervalle de fréquence (1, 2, 3, 4) ou onde porteuse (P₁ à P₉,...) il y a un niveau optimal prédéterminé de chaque variable de contrôle de spectre (D, A) associé à une valeur standard déterminée d'une couleur ou un ton de l'échelle des gris (c₀, c₁,... c₄) déterminé basée sur le temps (spectre), comme par exemple l'intensité, la puissance rayonnée, le MER, le BER, etc.
**caractérisée en ce qu'**elle est composée des phases suivantes:
associer à chaque niveau ou valeur de variable de contrôle de spectre (n₀, n₁,...,. n₄) une valeur respective déterminée d'une couleur ou un ton de l'échelle des gris déterminé;
représenter graphiquement, pour chaque point dans le temps (t) et chaque fréquence ou intervalle de fréquence (1, 2, 3, 4), ou pour chaque onde porteuse (P₁ à P₉,...), la valeur de la précédente couleur ou ton de l'échelle des gris déterminé, comme fonction du temps: et
déterminer la présence d'une interférence (D', D", A') lorsqu'il se produit une discontinuité dans la valeur de la précédente couleur ou ton de l'échelle des gris déterminé, donnant lieu à une nouvelle valeur (c₅, c₆, c₇) différente de celle de la couleur ou ton de l'échelle des gris déterminé standard attendue (c₀, c₁,... c₄);
où la valeur nouvelle et différente produite par l'interférence est associée à un type spécifique d'interférence.

2. Méthode, d'après la revendication 1, **caractérisée en ce que** ladite opération de représentation graphique est exécutée par des canaux à bandes de fréquences de télévision.

3. Méthode, d'après la revendication 1, **caractérisée en ce que** ladite opération de représentation graphique est exécutée par des ondes porteuses du spectre d'émission de la télévision numérique.

4. Méthode, d'après la revendication 1, **caractérisée en ce que** ladite variable de contrôle de spectre, dont le niveau est graphiquement représenté, correspond à l'intensité du signal.

5. Méthode, d'après la revendication 1, **caractérisée en ce que** ladite variable de contrôle de spectre, dont le niveau est graphiquement représenté, correspond au MER mesuré chez la porteuse.

6. Méthode, d'après la revendication 1, **caractérisée en ce que** ladite variable de contrôle de spectre, dont le niveau est graphiquement représenté, correspond au BER du signal numérique.

7. Dispositif pour l'identification et le diagnostic d'interférences dans des signaux RF, particulièrement des signaux de télévision analogique ou numérique, de radio ou de données, pour l'implémentation d'une méthode, d'après les revendications précédentes.
